# EUROPÄISCHE PATENTSCHRIFT

(11) **EP 0 334 298 B1**
(45) Veröffentlichungstag und Bekanntmachung des Hinweises auf die Patenterteilung: **30.11.1994**
(21) Anmeldenummer: 89105055.1
(22) Anmeldetag: 21.03.1989
(51) Int. Cl.: B23B 5/18, B23B 23/00

(54) **Verfahren und Vorrichtung zur Bearbeitung von rotationssymmetrischen Bauteilen**
Method and device for machining articles having a rotational symmetry
Méthode et dispositif d'usinage de pièces à symétrie rotative

(30) Priorität: 22.03.1988 DE 3809619
(43) Veröffentlichungstag der Anmeldung: 27.09.1989
(73) Patentinhaber: Boehringer Werkzeugmaschinen GmbH, D-73002 Göppingen (DE)
(72) Erfinder: Mayer, Theo, D-7325 Boll (DE)
(74) Vertreter: Vogeser, Werner, Dipl.-Ing.

(56) Entgegenhaltungen:
- DE-A- 1 552 291
- PATENT ABSTRACTS OF JAPAN vol. 6, no. 249 (M-177)(1127) 8 Dezember 1982,& JP-A-57 144660 (TOYODA KOKI K K) 7 September 1982,

## Beschreibung

Die Erfindung betrifft ein Verfahren zur Bearbeitung von rotationssymmetrischen Bauteilen wie Getriebewellen und auch Kurbel- und Nockenwellen, sowie eine Drehmaschine, bzw. Drehräummaschine, gemäß dem Oberbegriff der Ansprüche 7, 8 und 9.

Die Bearbeitung dieser Bauteile erfolgt meistens in verschiedenen Arbeitsstufen und auf verschiedenartigen spanenden Bearbeitungsmaschinen. Beispielsweise werden bei Kurbelwellen Wangen und Zapfen jedes Hauptlagers zunächst durch Außenrundfräsen oder Innenrundfräsen vorbearbeitet. Da nach diesem Arbeitsschritt speziell der Durchmesser des Zapfens noch nicht die an ihn gestellten Anforderungen hinsichtlich Rundheit, Rundlauf und Oberflächengüte erfüllt, muß er anschließend auf weiteren Maschinen fertig bearbeitet werden, also überdreht oder geschliffen werden.

Allerdings gibt es auch spezielle Bearbeitungsverfahren, gerade für Kurbelwellen, die in einem einzigen Bearbeitungsschritt eine so hohe Arbeitsgenauigkeit ermöglichen, daß weitere Zwischenbearbeitungsverfahren vor der Wärmebehandlung nicht mehr notwendig werden. Dies ist häufig beim sog. Rundräumen der Fall.

Sowohl bei einem Bearbeiten des Werkstückes über mehrere Bearbeitungsstufen auf mehreren verschiedenen Maschinen als auch beim Fertigbearbeiten mittels eines einzigen Arbeitsvorganges hat es sich als vorteilhaft erwiesen, Werkzeugmaschinen mit zwei sich einander gegenüberliegenden Hauptspindeln zu verwenden, die auch jeweils mit Backenfutter versehen sind und somit das rotationssymmetrische Werkstück an seinen beiden Enden während der Bearbeitung jeweils in Backenfutter spannen.

Gegenüber der rein punktförmigen Aufnahme wie etwa bei Spannung zwischen Spitzen, hat eine solche beidseitige Spannung in Backenfuttern den Vorteil, daß ein radiales Auslenken der oft biegeweichen Werkstücke wesentlich geringer ausfällt. Dies wirkt sich besonders bei der Bearbeitung des Mittelbereiches der Werkstücke günstig auf die Maßhaltigkeit aus. Eine solche Werkzeugmaschine ist als Typ K 10 in Form einer Kurbelwellendrehbank im Prospekt 2000555 der Firma GEBRÜDER BOEHRINGER GMBH aus dem Jahre 1955 gezeigt.

Nachteilig bei einer solchen Spannung des Werkstückes an beiden Enden durch Backenfutter war jedoch, daß die Bearbeitung der Umfangsflächen im Endbereich der Werkstücke, an denen die Backenfutter zugreifen, sowie evtl. auf den angrenzenden Wangen-bzw. Flanschflächen bereits vor der eigentlichen Werkstückbearbeitung auf anderen Maschinen und mittels einer anderen Einspannung erfolgen muß.

Beispielsweise geschieht eine solche Vorbearbeitung der Zapfen in den Endbereichen auf kombinierten Zentrier- und Drehmaschinen bei umlaufenden Werkzeugen zum Bearbeiten der Durchmesser der Zapfen. Sofern die Kurbelwellen durch Auswuchten zentriert werden, ist sogar eine separate Maschine zum Bearbeiten der Umfangs- und Wangenflächen in den Endbereichen der Kurbelwelle notwendig. Bereits diese unterschiedlichen Aufspannungen und das dafür notwendige Spannen und Entspannen des Werkstückes führen in der Regel zu Abstrichen bei der Maßhaltigkeit des fertig bearbeiteten Werkstückes. Insbes. die Rundlaufgenauigkeit der Umfangsflachen im Bezug zu den Zentrierungen lassen zu wünschen übrig, weil dies gerade bei feststehendem Werkstück und umlaufendem Werkzeug verfahrensbedingt nicht besser zu lösen ist.

Ein weiterer Nachteil besteht in den hohen Nebenzeiten, die bei der Bearbeitung mit unterschiedlichen Bearbeitungsverfahren auf verschiedenen Werkzeugmaschinen und in verschiedenen Aufspannungen anfallen, in denen die Werkstücke zwischen den einzelnen Maschinen hin und her transportiert, in den Werkstückspeichern der Puffer zwischen den einzelnen Bearbeitungsstufen zwischengelagert und anschließend wieder neu aufgespannt und justiert werden müssen. Für das Einspannen müssen selbstverständlich die Hauptantriebe der entsprechenden Maschine zum Stillstand heruntergefahren werden, was nicht nur eine zusätzliche Nebenzeit, sondern auch Energieaufwand und erhöhten Verschleiß des betreffenden Antriebs mit sich bringt.

Davon abgesehen fallen für mehrere Maschinen sowie evtl. benötigte Verkettungseinrichtungen sehr viel höhere Raum- und auch Maschineninvestitionskosten an als für eine einzige Werkzeugmaschine, die eine Komplettbearbeitung eines solchen Werkstücks ermöglicht.

Weiterhin ist aus DE-A-1 552 291 ein Verfahren bekannt, um auf einer Drehmaschine mit einem Backenfutter und gegenüberliegender Zentrierspitze eines Reitstockes ein eingespanntes Werkstück an dem dem Backenfutter zugewandten Ende vollständig am Umfang bearbeiten zu können. Zu diesem Zweck ist in das Backenfutter ein Stirnmitnehmer mit Zentrierspitze integriert, wobei Stirnmitnehmer und Zentrierspitze axial gegenüber dem Backenfutter aus- und eingefahren werden können.

Zur Bearbeitung der Mantelfläche in diesem Endbereich wird der backenfutterseitige Stirnmitnehmer mit der Zentrierspitze und damit das zwischen den Zentrierspitzen gehaltene Werkstück axial soweit aus dem Backenfutter herausgefahren, daß das Ende des Werkstückes noch außerhalb des Greifbereiches der Spannbacken liegt. In dieser Stellung wird das Werkstück lediglich durch den Stirnmitnehmer angetrieben und der Endbereich überdreht.

Anschließend wird die backenfutterseitige Zentrierspitze des Stirnmitnehmers axial in das Backenfutter hinein zurückgezogen. Da die gegenüberliegende Zentrierspitze des Reitstockes hydraulisch beaufschlagt und gegenüber dem Reitstock axial ausfahrbar ist, wird hierdurch die zweite Zentrierspitze im selben Maß aus dem Reitstock herausgefahren, wodurch das Werkstück mit seinem backenfutterseitigen Ende in den Bereich der Spannbacken gerät und durch diese gespannt wird. In dieser Aufspannung wird der Rest des Werkstückes bearbeitet.

Es ist daher die Aufgabe gemäß der Erfindung, die Bearbeitung der genannten Werkstücke in einer Aufspannung zu ermöglichen, wobei während der Bearbeitung des Mittelbereiches beide Endbereiches des Werkstückes zwischen radial wirkenden Spannmitteln gespannt sind.

Diese Aufgabe wird durch ein Verfahren gemäß Anspruch 1 bzw. 2 sowie durch eine Drehmaschine bzw. Drehräummaschine gemäß der Ansprüche 7, 8 bzw. 9 gelöst.

Dabei werden als erstes die Umfangs- und Radialflächen in den Endbereichen des Werkstücks bearbeitet, wobei für das zu bearbeitende Ende ausschließlich eine Spannung mittels Zentrierspitze möglich ist. Sobald beide Endbereiche der Kurbelwelle fertig bearbeitet sind, kann an den Umfangsflächen der Enden eine Spannung mittels der beiden vorhandenen radial wirkenden Spannmittel erfolgen, wodurch dann eine ausreichend stabile Spannung des Werkstückes für die Bearbeitung im Mittelbereich gegeben ist. Zusätzlich zur Spannung durch die radial wirkenden Spannmittel bleibt die Spannung zwischen Spitzen immer erhalten, so daß ein ein- oder zweiseitiges Lösen der radial spannenden Spannmittel noch keine Lageveränderung zur Folge hat, wie sie bei einem vollständigen Ausspannen und Neueinspannen der Werkstücks die Folge wäre.

Weiterhin werden durch diese Art der Komplettbearbeitung in einer einzigen Maschine und mit einer einzigen Aufspannung die Raumkosten auf den Raumbedarf dieser einzigen Maschine erniedrigt sowie die Investitionskosten für Maschinen, die die Vorbearbeitung der Endzapfen der Kurbelwelle vornehmen können, eingespart.

Der größte Vorteil dürfte jedoch in der Einsparung von Nebenzeiten liegen, da jede Bearbeitung auf einer zusätzlichen Maschine nicht nur Transport- und Liegezeiten mit sich bringt, sondern auch entsprechende Nebenzeiten der Maschine für Einstell-, Justier-, Werkzeugwechselzeiten und ähnliches. Durch die Verringerung dieser Nebenzeiten wird einerseits die Durchlaufzeit des Werkstücks im Betrieb gesenkt, was einen niedrigeren Bedarf an Umlaufvermögen zur Folge hat, und andererseits wird hiermit die Einhaltung extrem kurzer Liefertermine überhaupt erst möglich.

Je nach dem, welche Möglichkeiten die Dreh- bzw. Drehräummaschine bietet und welche Randbedingungen durch Stabilität und Formgebung des Werkstücks sowohl im rohen als auch im bearbeiteten Zustand vorliegen, kann die Bearbeitung der Endbereiche sowie des Mittelbereichs des rotationssymmetrischen Werkstücks auf unterschiedliche Art und Weise erfolgen.

Wenn beispielsweise das Werkstück in axialer Richtung so belastbar ist, daß die Anpreßkräfte eines Stirnmitnehmers aufgenommen werden können, so kann die Bearbeitung von Umfangs- und Radialflächen in den Endbereichen des Werkstückes sogar gleichzeitig erfolgen, während das Werkstück zwischen zwei Zentrierspitzen gespannt ist und über wenigstens einen Stirnmitnehmer angetrieben wird. Die Zentrierspitzen sind dabei wiederum in je einem radial spannenden Spannmittel gespannt, bzw. anstelle der Zentrierspitze der Stirnmitnehmer, in deren Zentrum sich die Zentrierspitze befindet.

Für die weitere Bearbeitung ist es allerdings notwendig, daß die Zentrierspitzen in axialer Richtung gegenüber den radial spannenden Spannmitteln, in denen sie sich befinden, verschiebbar sind, und die Zentrierspitze, die sich im Zentrum des Stirnmitnehmers befindet, sollte auch gegenüber diesem Stirnmitnehmer in der axialen Richtung verschiebbar sein. Die einfachste Ausgestaltung solcher axial verschiebbarer Zentrierspitzen wäre dann die, daß die Zentrierspitzen in den beiden Endstellungen, also der ausgefahrenen und der eingezogenen Endstellung, fixierbar wären. In der ausgefahrenen Stellung, in der die Spannung zwischen Spitzen zur Bearbeitung der Endbereiche erfolgte, werden die Zentrierspitzen in radialer Richtung zusätzlich durch die Spannung mittels der Greiforgane des radial wirkenden Spannmittels gestützt. In der zurückgezogenen Endstellung weichen die Zentrierspitzen dagegen hinter die vorderste Fläche der Greiforgane des radial wirkenden Spannmittels in axialer Richtung zurück, so daß die Umfangsflächen in den Endbereichen des Werkstückes bei einer Spannung zwischen Zentrierspitzen, bei der die Zentrierspitzen in ihrer zurückgezogenen Stellung verbleiben, von den Greiforganen des radial wirkenden Spannmittels zusätzlich gespannt werden können.

Wenn nun der erste Bearbeitungsschritt, nämlich das bereits beschriebene Bearbeiten der Endbereiche des Werkstückes bei einer Spannung zwischen Zentrierspitzen, die in ihrer ausgefahrenen Endstellung verharren, abgeschlossen ist, so weichen die Zentrierspitzen in ihre zurückgezogene Stellung zurück. Da dennoch weiterhin das Werkstück zwischen den Zentrierspitzen gehalten werden soll, muß im gleichen Maße, in dem die beiden Zentrierspitzen in ihre zurückgezogene Stellung zurückweichen, wenigstens eines der Futter entsprechend schnell in Richtung auf das Werkstück nachgeführt werden, um die Lage der beiden Zentrierspitzen relativ zum Werkstück beizubehalten und eine Spannung des Werkstückes aufrechtzuerhalten. Dies kann zwar bei weiterhin laufendem Hauptantrieb, also laufenden Spindeln, geschehen, jedoch müssen in aller Regel die Backen radial nach außen gefahren werden, um eine Kollision mit dem Werkstück zu vermeiden, welches sich ja auf diese Weise mit seinen Endbereichen in die beiden Spannfutter hineinbewegt. Die Bewegungsmöglichkeit des einen Spannfutters auf das Werkstück zu kann sowohl durch eine Bewegungsmöglichkeit des Spannfutters bezüglich der ihm zugeordneten Hauptspindel als auch einer Bewegungsmöglichkeit der gesamten Hauptspindel bzw. des entsprechenden Spindelstockes gegeben sein.

Unter den erwähnten radial wirkenden Spannmitteln dürfte wohl das bekannteste das Backenfutter, speziell das Dreibackenfutter sein, beim dem als Greiforgane die radial beweglichen Backen wirken, die das zu spannende Stück ergreifen.

Jedoch könnten für den hier beschriebenen Zweck ebenso gut Spannzangen Verwendung finden, die den Vorteil bieten, daß sie eine geringere Masse aufweisen als ein übliches Dreibackenfutter und zusätzlich, bauartbedingt, eine höhere Rundlaufgenauigkeit bei der Bearbeitung von rotationssymmetrischen Bauteilen erzielen lassen. Ein weiterer, speziell für die vorliegende Erfindung relevanter Vorteil solcher Spannzangen liegt aber auch darin, daß eine Axialbewegung solcher Spannzangen leichter zu verwirklichen ist, als die eines Backenfutters bzw. der Backen eines Backenfutters.

Lediglich zur Vereinfachung der Beschreibung soll im folgenden nur noch speziell von Backen bzw. Backenfuttern die Rede sein.

Sobald sich nun die beiden Endbereiche des Werkstückes im Endbereich der Backen der beiden Backenfutter befinden, kann es zusätzlich zur Spannung zwischen den Zentrierspitzen durch die Backen der Backenfutter gespannt werden, was eine ausreichend stabile Spannung zur nun folgenden Bearbeitung des Mittelbereichs des Werkstücks bietet, wobei naturgemäß die höchsten Biegekräfte auftreten.

Sollte das Werkstück die axiale Belastung durch einen Stirnmitnehmer nicht aufnehmen können, wie es z.B. häufig bei Kurbelwellen der Fall ist, so muß bei der Bearbeitung anders vorgegangen werden. Auch für diese Bearbeitungsart ist eine Dreh- und Drehräummaschine notwendig, bei der zwei einander gegenüberliegende Hauptspindeln jeweils ein Backenfutter tragen, in dessen Zentrum sich axial verschiebbare Zentrierspitzen befinden, und bei denen mindestens eines der Backenfutter seine axiale Position verändern kann.

Ebenso wie beim ersten Bearbeitungsverfahren wird das Werkstück während der gesamten Bearbeitung zwischen den Zentrierspitzen gehalten. Allerdings wird die Bearbeitung der Endbereiche des Werkstückes nicht gleichzeitig, sondern nacheinander vorgenommen, was den Vorteil hat, daß der Antrieb nicht über einen Stirnmitnehmer erfolgen muß, welcher immer große axiale Kräfte auf das Werkstück aufbringt. Vielmehr erfolgt der Antrieb dadurch, daß der nicht in Arbeit befindliche Endbereich des Werkstücks zusätzlich zur Halterung der Zentrierspitze von dem Backenfutter gespannt und angetrieben wird, wofür es selbstverständlich notwendig ist, daß die auf dieser Werkstückseite angeordnete Zentrierspitze sich in ihrer zurückgezogenen Stellung befindet. Weiterhin ist es notwendig, daß die Backen dieses Backenfutters unabhängig voneinander bewegbar sind, da sie notmalerweise das Werkstück an einem unbearbeiteten und damit unrunden Umfang spannen müssen. Dagegen wird das Werkstück auf der gegenüberliegenden Seite nur von der Zentrierspitze gehalten, welche sich in ihrer ausgefahrenen Position befindet, so daß Umfangsflächen und auch Radialflächen bis in die Nähe der Zentrierspitze dieses Endbereichs des Werkstücks ungehindert bearbeitet werden können.

Sobald die Bearbeitung des ersten Endbereichs vollzogen ist, ändern die beiden Zentrierspitzen ihre Lage; d.h. sie bewegen sich synchron von der ausgefahrenen in die zurückgezogene Position und umgekehrt, wodurch das Werkstück, bei unveränderter Position der beiden Spannfutter, axial verschoben wird. Hierzu ist es selbstverständlich notwendig, daß vorher die Backen beider Spannfutter radial nach außen gefahren wurden, um Kollisionen zu verhindern. Nunmehr befindet sich die Zentrierspitze auf der Seite des Werkstücks, deren Endbereich bereits bearbeitet ist, in der zurückgezogenen Position, so daß die Umfangsfläche in diesem Endbereich zusätzlich von den Backen des Backenfutters gespannt werden kann. Dagegen wird das Werkstück nunmehr auf der entgegengesetzten Seite ausschließlich durch die Zentrierspitze gehalten, so daß nunmehr dieser Endbereich des Werkstückes für die Bearbeitung zur Verfügung steht.

Bevor anschließend der Mittelbereich des Werkstückes der Bearbeitung unterzogen wird, weicht die Zentrierspitze auf der Seite des Werkstücks, dessen Endbereich zuletzt bearbeitet wurde, in ihre zurückgezogene Position gegenüber dem Backenfutter zurück, um den Backen des Backenfutters den Zugriff auf die Umfangsfläche des zweiten Endbereichs des Werkstückes zu ermöglichen. Da jedoch die Lage der Zentrierspitze relatiy zum Werkstück unverändert bleiben muß, um die Spannung zwischen den Zentrierspitzen aufrechtzuerhalten, muß sich das Backenfutter im selben Maße auf das Werkstück zubewegen, indem sich die Zentrierspitze relativ zum Backenfutter zurückzieht. Selbstverständlich können auch hier alle genannten Arbeitsoperationen bei laufenden Hauptspindeln durchgeführt werden.

Sollte jedoch lediglich eine Werkzeugmaschine mit zwei einander gegenüberliegenden Hauptspindeln und Backenfuttern zur Verfügung stehen, bei der sich die Position wenigstens eines der Backenfutter nicht oder nicht synchron zur Bewegung der zugeordneten Zentrierspitze in axialer Richtung verändern läßt, so kann das Heranfahren des Spannfutters. wie beim vorher beschriebenen Bearbeitungsverfahren im letzten Schritt notwendig, dadurch umgangen werden, daß die Backen der Backenfutter in axialer Richtung so weit reichen, daß sie zwar bei ausgefahrener Zentrierspitze nicht nur diese Zentrierspitze spannen,sondern bereits bei nur zur Hälfte zurückgezogener Zentrierspitze schon das Werkstück spannen. Auf diese Weise kann das Werkstück für die Bearbeitung des Mittelbereichs in einer Mittelstellung belassen werden, d.h., daß beide Zentrierspitzen in der Mittelstellung zwischen vollständig ausgefahrener und vollständig zurückgezogener Position verbleiben, und bereits in dieser Mittelstellung werden beide Endbereiche des Werkstücks von den Backen der Backenfutter gespannt und angetrieben.

Die dargestellten Bearbeitungsarten werden im folgenden anhand der beigefügten Zeichnungen beispielhaft näher erläutert.

Es zeigt:
- Fig. 1 und 2: die Bearbeitung von axial stabilen Werkstücken;
- Fig. 3, 4 und 5: die Bearbeitung von weniger biegesteifen Werkstücken auf einer Werkzeugmaschine mit wenigstens einem axial verschieblichen Backenfutter;
- Fig. 6, 7 und 8: die Bearbeitung von biegesteifen Werkstücken auf einer Werkzeugmaschine mit nicht verfahrbaren Backenfuttern;
- Fig. 9: eine Prinzipdarstellung einer Drehmaschine, wie sie für die beschriebenen Bearbeitungsvorgänge notwendig ist.

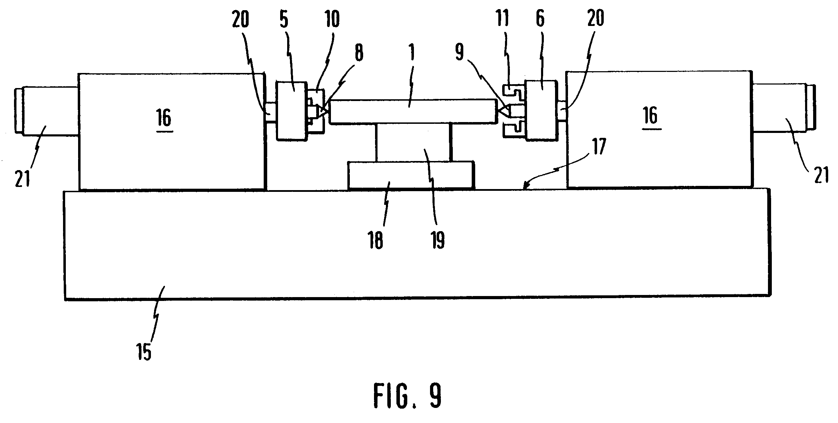

Grundvoraussetzung für die beschriebenen Bearbeitungen ist eine Dreh- oder Drehräummaschine mit zwei einander gegenüberliegenden Hauptspindeln, die jeweils mit einem Backenfutter sowie jeweils im Zentrum des Backenfutters axial verschieblich angeordneten Zentrierspitzen ausgestattet sind. Eine solche Drehmaschine zeigt beispielsweise Fig. 9 in einer Prinzipdarstellung. Hierbei ist deutlich zu erkennen, daß auf einem Maschinenbett 15 zwei Spindelkästen 16 angeordnet sind, aus denen die beiden Hauptspindeln 20 jeweils in Richtung auf den anderen Spindelkasten herausragen. Beide Hauptspindeln 20 sind mit Backenfuttern 5, 6 ausgestattet, in deren Zentren sich axial verschiebliche Zentrierspitzen 8, 9 befinden, die ggf. auch von den Backen 10, 11 der Backenfutter 5, 6 gespannt werden können. Hauptspindeln 20, Backenfutter 5, 6 und Zentrierspitzen 8, 9 der beiden Seiten fluchten und sind synchron antreibbar, beispielsweise über entsprechende Steuerung der separat für jeden Spindelkasten vorhandenen Hauptantriebsmotoren 21. Selbstverständlich können beide Hauptspindeln 20 auch von einem gemeinsamen Hauptantriebsmotor 21 angetrieben werden. Zwischen den beiden Zentrierspitzen 8, 9 ist im vorliegenden Fall ein Werkstück 1 eingespannt, welches durch Werkzeuge bearbeitet werden kann, die auf dem Querschlitten 19 befestigt werden, der auf dem Längsschlitten 18 quer verfahrbar ist, welcher wiederum entlang der Führung 17 auf dem Bett 15 parallel zur Längsachse des Werkstücks 1 verfahrbar ist.

Sollte eines der Backenfutter 5, 6 seine Position in axialer Richtung verändern können, so kann dies entweder durch eine Axialverschiebung des Backenfutters 5, 6 gegenüber der entsprechenden Hauptspindel 20, oder durch eine Axialverschiebung der Hauptspindel 20 gegenüber dem Spindelkasten 16 oder auch durch eine Relativbewegung des gesamten Spindelkastens 16 gegenüber dem Maschinenbett 15 geschehen. In diesem letzten Falle könnte für die Verschiebung des Spindelkastens 16 auf dem Bett 15 die gleiche Führung 17 verwendet werden, auf der auch der Längsschlitten 18 läuft.

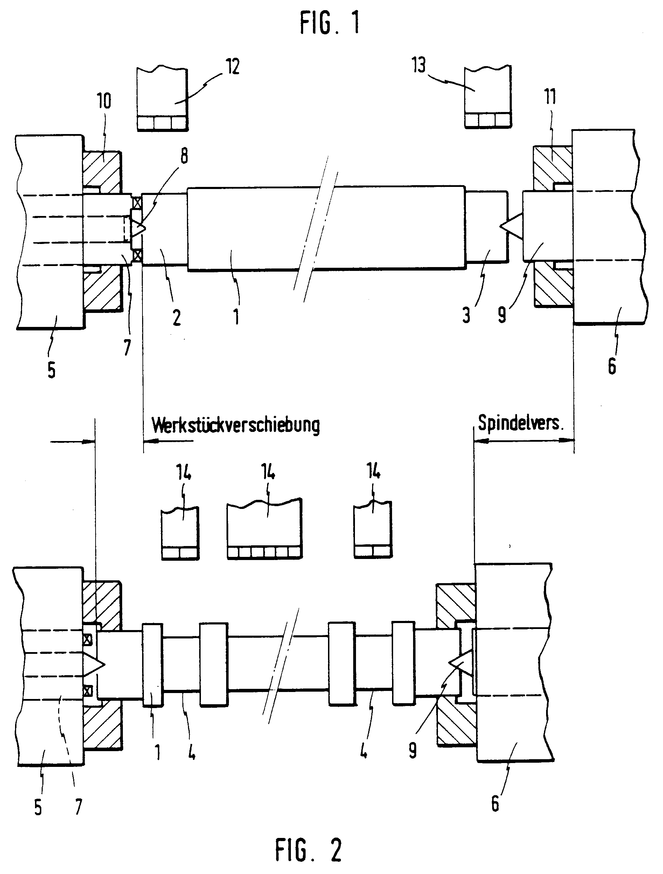

Sollte auf einer solchen Werkzeugmaschine ein rotationssymmetrisches Werkstück entsprechend der Vorgehensweise der Fig. 1 und 2 bearbeitet werden, so müßte eines der beiden Backenfutter zusätzlich mit einem Stirnmitnehmer 7 ausgestattet werden, wie er in den Fig. 1 und 2 zu erkennen ist. Dieser Stirnmitnehmer 7 ist relativ zum Backenfutter 5 axial verschieblich, ebenso wie die Zentrierspitze 8 relativ zum Stirnmitnehmer 7 axial verschiebbar ausgebildet sein muß. Im gegenüberliegenden Backenfutter 6 befindet sich dagegen ausschließlich eine Zentrierspitze 9, die wiederum axial im Backenfutter 6 verschieblich sein muß.

Zur Bearbeitung der Endbereiche 2, 3 des Werkstücks 1 durch die Werkzeuge 12, 13 wird das Werkstück 1 zwischen den Zentrierspitzen 8, 9 gehalten. Der Antrieb erfolgt über den Stirnmitnehmer 7, der in Fig. 1 in dem Backenfutter 5 dargestellt ist. Die Zentrierspitzen 8, 9, die in der ausgefahrenen Endlage und der zurückgezogenen Endlage fixierbar und dazwischen frei verfahrbar sind, befinden sich dabei in der ausgefahrenen Endstellung. Um dennoch ein radiales Auslenken, hervorgerufen durch die Bearbeitungskräfte am Werkstück, zu vermeiden, werden auf der einen Seite die Zentrierspitze 9 von den Backen 11 des Backenfutters 6 und auf der anderen Seite der Stirnmitnehmer 7 und damit indirekt auch die Zentrierspitze 8 der Backen 10 des Backenfutters 5 radial gestützt. Eine solche Antriebsweise ist jedoch nur bei solchen Werkstücken möglich, die durch den Stirnmitnehmer 7 aufgebrachten Axialkräfte ohne seitliche Ausbiegung aufnehmen können.

Aufgrund der nun vorliegenden Spannung des Werkstücks 1 können Umfangs- und teilweise auch die Radialflächen an den Endbereichen des Werkstücks 1 ungehindert bearbeitet werden.

Für die anschließende Bearbeitung des Mittelbereichs 4 des Werkstücks 1, bei dem naturgemäß die stärksten radialen Belastungen des Werkstückes auftreten, kann das Werkstück 1 nunmehr zusätzlich zu seiner Spannung zwischen den Zentrierspitzen 8, 9 an den nunmehr bearbeiteten Umfangsflächen in den Endbereichen 2, 3 mittels der Backen 10, 11 gespannt werden, was zu einer wesentlich geringeren Durchbiegung während der nachfolgenden Bearbeitung führt als bei einer Spannung ausschließlich zwischen den Zentrierspitzen 8, 9. Damit die Backen 10, 11 jedoch das Werkstück 1 greifen können, ist es notwendig, daß sich die Zentrierspitzen 8, 9 in ihrer zurückgezogenen Stellung befinden. Da jedoch gleichzeitig die Halterung zwischen den Zentrierspitzen 8, 9 erhalten bleiben soll, ist es notwendig, daß trotz der Zurückziehung der beiden Zentrierspitzen 8, 9 relativ zu den Backenfuttern 5, 6 die Lage der beiden Zentrierspitzen 8, 9 relativ zum Werkstück 1 beibehalten bleibt. Dies geschieht durch eine axiale Lageveränderung wenigstens eines der beiden Backenfutter 5, 6 in Richtung auf das Werkstück 1 um einen Betrag, der der Summe der Wege entspricht, um die sich die beiden Zentrierspitzen 8, 9 relativ zu den entsprechenden Backenfuttern 5, 6 zurückgezogen haben. Die axiale Lageveränderung dieses Backenfutters 5 bzw. 6 muß nicht nur im Endzustand mit den Lageveränderungen der beiden Zentrierspitzen 8, 9 korelieren, sondern auch während der Durchführung der Lageveränderungsynchron hierzu erfolgen, damit die Halterung des Werkstücks 1 zwischen den Zentrierspitzen 8, 9 auch während der Zurückziehung dieser Zentrierspitzen relativ zu den Backenfuttern 5, 6 durchgehend erhalten bleibt. Selbstverständlich muß hierzu auch zusätzlich nicht nur der Stirnmitnehmer 7 vom Werkstück zurückgezogen werden, sondern es müssen auch die Backen 10, 11 der Backenfutter 5, 6 die vorher den Stirnmitnehmer 7 bzw. die Zentrierspitze 9 gespannt haben, radial nach außen weggefahren werden, um ein Einführen des Werkstücks 1 in den Greifbereich der Backen 10 bzw. 11 ohne Kollision zu ermöglichen.

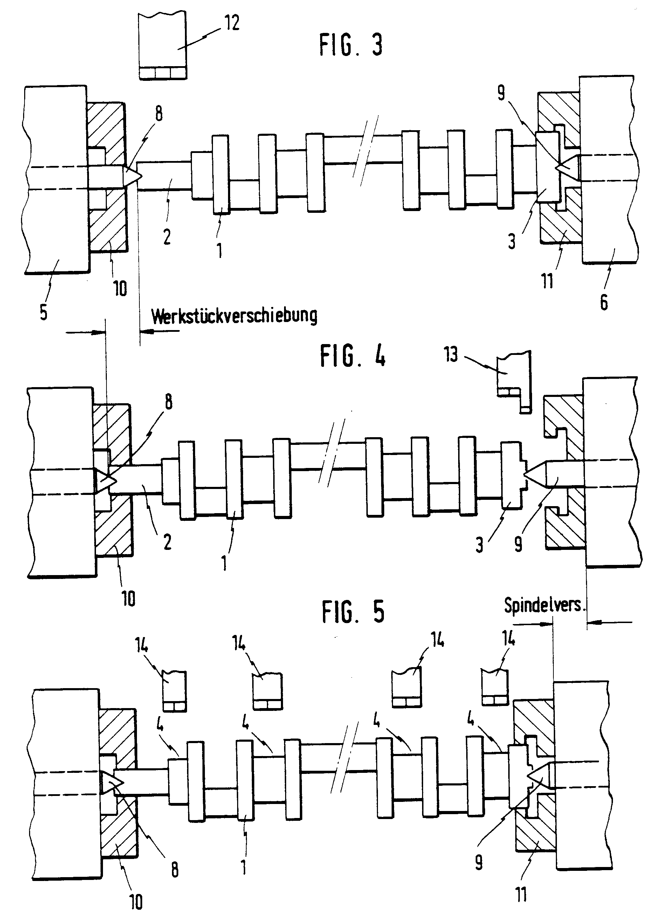

Demgegenüber ist in den Fig. 3 bis 5 die Bearbeitung des Werkstückes dargestellt, welches nicht stabil genug ist, um die Axialbelastungen durch einen Stirnmitnehmer ohne Ausbiegung aufzunehmen. Deshalb werden bei einem solchen Werkstück 1 die beiden Endbereiche 2, 3 nicht gleichzeitig bearbeitet, sondern, wie in den Fig. 3 und 4 dargestellt, nacheinander. In Fig. 3 ist die Bearbeitung des linken Endbereichs 2 des Werkstücks 1 durch ein entsprechendes Werkzeug 12 dargestellt, wobei dieser linke Endbereich 2, ähnlich wie bei der Bearbeitung in Fig. 1 der rechte Endbereich 3, ausschließlich in der Zentrierspitze 8 gehaltert ist. Dagegen wird der rechte Endbereich 3 des Werkstücks 1 zusätzlich zur Halterung durch die Zentrierspitze 9 durch die Backen 11 des rechten Backenfutters 6 gespannt und auch angetrieben, wodurch auf einen Stirnmitnehmer verzichtet werden kann. Da bei der in Fig. 3 dargestellten Bearbeitung des ersten Endbereichs 2 naturgemäß der andere Endbereich 3 unbearbeitet ist, ist es sehr empfehlenswert, wenn die Backen 11 des rechten Backenfutters 6, welche an einem unbearbeiteten Umfang des rechten Endbereichs 3 des Werkstücks 1 angreifen müssen, unabhängig voneinander radial bewegt werden können, um die Unrundheiten der unbearbeiteten Umfangsfläche auszugleichen.

Sobald auf diese Art und Weise der linke Endbereich des Werkstücks 1 bearbeitet ist, werden die Backen 10, 11 der Backenfutter 5, 6, welche die linke Zentrierspitze 8 bzw. den rechten Endbereich 3 des Werkstücks 1 gespannt haben, radial nach außen gefahren, um eine axiale Lageveränderung des Werkstücks 1, und zwar in den Greifbereich der Backen 10 des linken Spannfutters 5 hinein, zu ermöglichen. Dies geschieht durch synchrone Axialbewegung der Zentrierspitzen 8, 9, d.h., daß sich die linke Zentrierspitze 8 im gleichen Maß in ihre zurückgezogene Stelung in das linke Backenfutter 5 hineinbewegt, in dem sich die rechte Zentrierspitze 9 aus dem rechten Backenfutter 6 in ihre ausgefahrene Stellung bewegt. Auf diese Art und Weise kann nunmehr, ganz ähnlich der Fig. 3, der linke, nunmehr bereits bearbeitete Endbereich 2 des Werkstücks 1 nicht nur von der linken Zentrierspitze 8, sondern auch von den Backen 10 des linken Backenfutters 5 gespannt und angetrieben werden, während auf der anderen Seite das Werkstück 1 lediglich in der mitlaufenden Zentrierspitze 9 gehaltert wird und somit für die Bearbeitung des rechten Endbereichs 3 des Werkstücks 1 zur Verfügung steht. Dabei kann die rechte Zentrierspitze 9 das Werkstück 1 in der frei ausgefahrenen Stellung haltern, oder die rechte Zentrierspitze 9 wird durch Spannung mittels der Backen 11 des rechten Backenfutters 6 radial abgestützt.

Da nunmehr beide Endbereiche 2, 3 des Werkstücks 1 bearbeitet sind, kann das Werkstück an den Umfangsflächen in diesem Endbereich mittels der Backen 10, 11 in den Backenfuttern 5, 6 gespannt werden, was eine ausreichend stabile Aufspannung zur anschließenden Bearbeitung des Mittelbereichs 4 durch Drehen bzw. Drehräumen bietet, wie in Fig. 5 dargestellt. Bereits bei der Bearbeitung des rechten Endbereichs 3 war der linke, bereits bearbeitete Endbereich 2 des Werkstücks 1 durch die Backen 10 des linken Backenfutters 5 gespannt, wobei sich naturgemäß die linke Zentrierspitze 8 in ihrer zurückgezogenen Position gegeüber dem Backenfutter 5 befand. Damit nunmehr, wie in Fig. 5 dargestellt, auch der rechte Endbereich 3 in den Greifbereich der Backen 11 des rechten Backenfutters 6 kommt, muß sich auch die rechte Zentrierspitze 9 gegenüber dem Backenfutter 6 in ihre zurückgezogene Position bewegen, wobei jedoch die Lage der rechten Zentrierspitze 9 relativ zum Werkstück 1 unverändert bleiben muß. Dies wird durch eine Axialbewegung des rechten Backenfutters 6 auf das Werkstück 1 zu, umgekehrt synchron zur Rückzugsbewegung der rechten Zentrierspitze 9 relativ zum Backenfutter 6, bewirkt. Dabei müssen selbstverständlich wieder die Backen 11 des rechten Backenfutters 6 radial zurückgezogen sein, um Kollisionen mit dem Werkstück 1 zu vermeiden. Jedoch können die Hauptspindeln 20, welche die Backenfutter 5, 6 antreiben, mit unveränderter Geschwindigkeit weiterlaufen, wie dies auch bei den übrigen beschriebenen Veränderungen der Gesamtspannung des Werkstückes 1 jeweils möglich ist.

Dies bietet die bereits erläuterten Vorteile einer Reduzierung der Nebenzeiten sowie eines geringeren Verschleißes der bzw. des Hauptantriebsmotors 21 der Hauptspindeln 20.

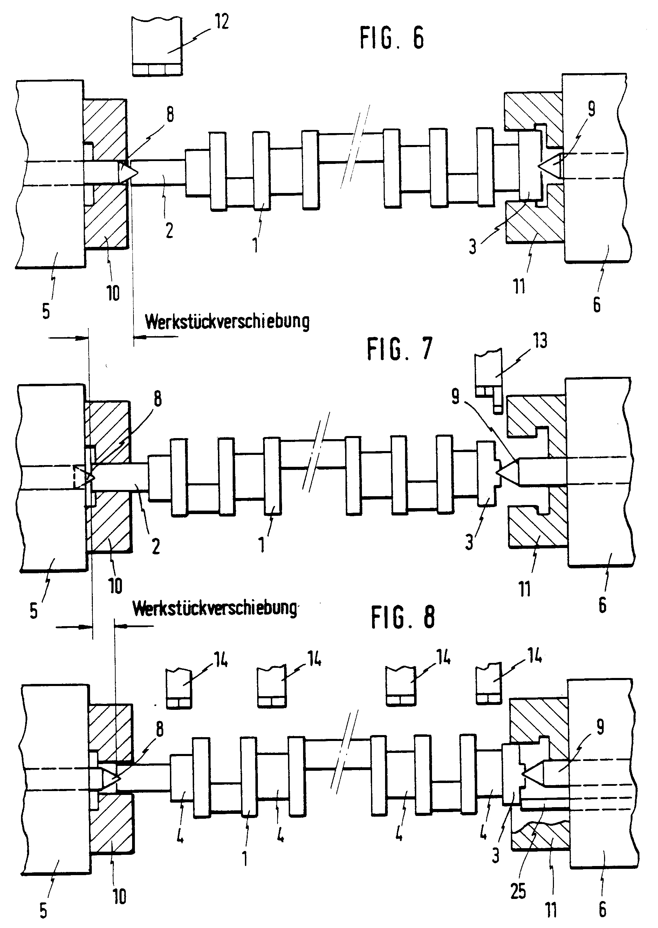

Sollte für die Bearbeitung jedoch nur eine Dreh- bzw. Drehräummaschine zur Verfügung stehen, bei der die beiden einander gegenüberliegenden Backenfutter 5, 6 ihre axiale Lage nicht verändern können bzw. eine solche Lageveränderung nicht, wie notwendig, synchron zu den Axialbewegungen der Zentrierspitzen 8, 9 erfolgen kann, so kann die Bearbeitung des Werkstücks 1 wie in den Fig. 6 bis 8 dargestellt, abgewandelt werden.

Dabei entsprechen die Fig. 6 und 7 hinsichtlich der Vorgehensweise vollständig den Fig. 3 und 4, jedoch wird bei der anschließenden Bearbeitung des Mittelbereichs 4 des Werkstücks 1, wie in Fig. 8 dargestellt, eine Spannung der Endbereiche 2, 3 des Werkstücks 1 durch die Backen 10, 11 der Backenfutter 5, 6, im Gegensatz zu Fig. 5, nicht durch eine Axialbewegung eines der Backenfutter 5, 6 ermöglicht, sondern durch eine andere Dimensionierung der axialen Erstreckung der Backen 10, 11. Diese wird so gewählt, daß bei ausgefahrenen Zentrierspitzen 8, 9 ausschließlich diese durch die Backen 10, 11 gespannt werden, andererseits jedoch nicht erst bei vollständig zurückgezogenen Zentrierspitzen, sondern bereits bei zur Hälfte zurückgezogenen Zentrierspitzen, die Umfangsflächen in den Endbereichen 2, 3 des Werkstücks 1 von den Backen 10, 11 erfaßt werden. Diese größere axiale Erstreckung der Backen 10, 11 ist in den Fig. 6 bis 8 zu erkennen. Darüberhinaus ist in Fig. 8 ein Längsanschlag 15 vorgesehen, der zum Anfahren der mittleren Position der Zentrierspitzen 8, 9 zwischen der ausgefahrenen und der zurückgezogenen Position dient. Diese ist erreicht, wenn das Werkstück 1 bei seiner Lageveränderung zwischen der in Fig. 7 und der in Fig. 8 dargestellten Position axial nach rechts mit einer definierten Fläche diesen Längsanschlag 25 erreicht. Zusätzlich ist dadurch eine definierte Position des Werkstücks 1 gegeben, von der für Werkzeugpositionierung u.ä. ausgegangen werden kann.

## Patentansprüche

1. Verfahren zur Bearbeitung von rotationssymmetrischen Werkstücken (1) auf Drehmaschinen oder Drehräummaschinen mit zwei sich gegenüberliegenden Hauptspindeln (5,6), welche mit radial wirkenden Spannmitteln (10,11) und jeweils zugeordneten axial beweglichen Zentrierspitzen (8,9) ausgerüstet sind, wobei
a) zuerst gleichzeitig die Bearbeitung der Endbereiche (2,3) des Werkstückes (1) geschieht, während das Werkstück (1) zwischen Zentrierspitzen (8,9) gespannt ist und von mindestens einem Stirnmitnehmer (7) angetrieben wird,
b) anschließend die Zentrierspitzen (8,9) synchron axial so bezüglich der radial wirkenden Spannmittel (10,11) und zu diesem Zweck wenigstens eines der radial wirkenden Spannmittel (10, 11) bezüglich des Maschinengrundgestelles so bewegt werden, daß die Endbereiche (2,3) des Werkstückes (1) in den Greifbereich der radial wirkenden Spannmittel (10,11) gelangen und
c) dann der Mittelbereich (4) des Werkstückes (1) bearbeitet wird, während das Werkstück (1) an den bereits bearbeiteten Umfangsflächen der Endbereiche (2,3) des Werkstückes (1) durch die radial wirkenden Spannmittel (10,11) gespannt und angetrieben wird
d) wobei die Spannung zwischen den Zentrierspitzen (8,9) durchgehend erhalten bleibt.

2. Verfahren zur Bearbeitung von rotationssymmetrischen Werkstücken (1) auf Drehmaschinen oder Drehräummaschinen mit zwei sich gegenüberliegenden Hauptspindeln (5,6), welche mit radial wirkenden Spannmitteln (10,11) und jeweils zugeordneten axial beweglichen Zentrierspitzen (8,9) ausgerüstet sind, wobei
a) zuerst der eine Endbereich (2) des Werkstückes (1) bearbeitet wird, wobei der zu bearbeitende Endbereich (2) mittels der Zentrierspitze (8) und der andere Endbereich (3) des Werkstückes (1) mittels der Zentrierspitze (9) und radial wirkenden Spannmitteln (11) gehalten wird,
b) anschließend die Zentrierspitzen (8,9) synchron axial mit dem Werkstück (1) so bezüglich der radial wirkenden Spannmittel (10,11) bewegt werden, daß der Endbereich (2) des Werkstückes (1) in den Greifbereich der radial wirkenden Spannmittel (10) und der andere Endbereich des Werkstückes (1) außerhalb des Bereiches der radial wirkenden Spannmittel (11) gelangt,
c) dann der andere Endbereich (3) des Werkstückes (1) bearbeitet wird, wobei der bereits bearbeitete Endbereich (2) von der Zentrierspitze (8) und radial wirkenden Spannmitteln (10) gespannt wird, während der zu bearbeitende Endbereich (3) nur von einer Zentrierspitze (9) gehalten wird,
d) anschließend die Zentrierspitzen (8,9) mit dem Werkstück (1) synchron axial so bezüglich wenigstens einer der radial wirkenden Spannmittel (10,11) bewegt werden, daß beide Endbereiche (2,3) des Werkstückes (1) in den Bereich der radial wirkenden Spannmittel (10,11) gelangen, und
e) zuletzt der Mittelbereich des Werkstückes (1) bearbeitet wird, wobei das Werkstück (1) an beiden Enden sowohl durch je eine Zentrierspitze (8,9) als auch durch die radial wirkenden Spannmittel (10,11) gespannt und angetrieben wird,
f) wobei die Spannung des Werkstückes (1) zwischen den Zentrierspitzen (8,9) durchgehend aufrechterhalten bleibt.

3. Verfahren zur Bearbeitung von rotationssymmetrischen Werkstücken nach einem der vorhergehenden Ansprüche,
**dadurch gekennzeichnet, daß**
die Relativbewegung in axialer Richtung zwischen den radialen Spannmitteln (10,11) und den Zentrierspitzen (8,9) durch eine Bewegung der betreffenden Zentrierspitze gegenüber dem zugeordneten radial wirkenden Spannfutter geschieht.

4. Verfahren zur Bearbeitung von rotationssymmetrischen Werkstücken nach einem der vorhergehenden Ansprüche,
**dadurch gekennzeichnet, daß**
die Relativbewegung in axialer Richtung zwischen den radialen Spannmitteln (10,11) und den Zentrierspitzen (8,9) durch eine Bewegung der betreffenden Zentrierspitze gegenüber den zugeordneten radial wirkenden Spannbacken geschieht.

5. Verfahren zur Bearbeitung von rotationssymmetrischen Werkstücken nach einem der vorhergehenden Ansprüche,
**dadurch gekennzeichnet, daß**
die Relativbewegung in axialer Richtung zwischen den radialen Spannmitteln (10,11) und den Zentrierspitzen (8,9) durch eine Bewegung der betreffenden Zentrierspitze gegenüber der zugeordneten radial wirkenden Hauptspindel (5,6) geschieht.

6. Verfahren zur Bearbeitung von rotationssymmetrischen Werkstücken nach einem der vorhergehenden Ansprüche,
**dadurch gekennzeichnet, daß**
die Zentrierspitzen (8,9) in der gegenüber dem zugeordneten radial wirkenden Spannmittel (10,11) ausgefahrenen Position radial durch die radial wirkenden Spannmittel (10,11) gespannt und abgestützt werden.

7. Drehmaschine, bzw. Drehräummaschine mit zwei gegenüberliegenden Hauptspindeln (5,6) welche mit radial wirkenden Spannmitteln (10,11) und darin beweglichen, mitlaufenden Zentrierspitzen (8,9) ausgerüstet sind und mit wenigstens einem Stirnmitnehmer (7), zur Durchführung des Verfahrens nach Anspruch 1,
**dadurch gekennzeichnet, daß**
a) der Stirnmitnehmer (7) relativ zur zugeordneten Zentrierspitze (8,9) axial verschiebbar ist,
b) die radial wirkenden Spannmittel (10,11) axial gegeneinander verschiebbar sind, und
c) die Verschiebung der Zentrierspitzen (8,9) synchron zur Verschiebung der radial wirkenden Spannmittel (10,11) durchführbar ist.

8. Drehmaschine, bzw. Drehräummaschine mit zwei gegenüberliegenden Hauptspindeln (5,6) welche mit radial wirkenden Spannmitteln (10,11) und darin beweglichen, mitlaufenden Zentrierspitzen (8,9) ausgerüstet sind, zur Durchführung des Verfahrens nach Anspruch 2,
**dadurch gekennzeichnet, daß**
a) die radial wirkenden Spannmittel (10,11) axial relativ gegeneinander verschiebbar sind,
b) die Greiforgane wenigstens eines der radial wirkenden Spannmittel (10,11) unabhängig voneinander radial beweglich sind und,
c) die Verschiebung der Zentrierspitzen (8,9) synchron zur Verschiebung der radial wirkenden Spannmittel (10,11) durchführbar ist.

9. Drehmaschine, bzw. Drehräummaschine mit zwei gegenüberliegenden Hauptspindeln (5,6) welche mit radial wirkenden Spannmitteln (10,11) und darin beweglichen, mitlaufenden Zentrierspitzen (8,9) ausgerüstet sind, zur Durchführung des Verfahrens nach Anspruch 2,
**dadurch gekennzeichnet, daß**
a) die Greiforgane der beiden radial wirkenden Spannmittel (10,11) in axialer Richtung so dimensioniert sind, daß bei axialer Mittelstellung der Zentrierspitzen (8,9) zwischen der ausgefahrenen und der zurückgezogenen Stellung die Spitzen der Zentrierspitzen (8,9) im axialen Greifbereich der radial wirkenden Spannmittel liegen,
b) die Zentrierspitzen (8,9) in axialer Richtung in dieser Mittelstellung fixierbar sind, und
c) die Greiforgane wenigstens eines der radial wirkenden Spannmittel (10,11) unabhängig voneinander radial beweglich sind.

10. Drehmaschine, bzw. Drehräummaschine nach einem der vorhergehenden Ansprüche,
**dadurch gekennzeichnet, daß**
die Zentrierspitzen (8,9) in der ausgefahrenen und der zurückgezogenen Einstellung fixierbar sind.

11. Drehmaschine, bzw. Drehräummaschine nach einem der vorhergehenden Ansprüche,
**dadurch gekennzeichnet, daß**
die Greiforgane der radial wirkenden Spannmittel (10,11) axial bezüglich des Grundkörpers dieser radial wirkenden Spannmittel (10,11) beweglich sind.

12. Drehmaschine, bzw. Drehräummaschine nach einem der vorhergehenden Ansprüche,
**dadurch gekennzeichnet, daß**
als radial wirkende Spannmittel Backenfutter (5,6) mit Backen (10,11) eingesetzt werden.

13. Drehmaschine, bzw. Drehräummaschine nach einem der vorhergehenden Ansprüche,
**dadurch gekennzeichnet, daß**
als radial wirkenden Spannmittel Spannzangen vorhanden sind.

## Claims

1. Process for the working of rotationally symmetrical workpieces (1) on lathes or rotary broaching machines having two mutually opposing main spindles (5, 6) which are equipped with radially acting clamping means (10, 11) and respectively assigned, axially movable centres (8, 9), wherein
a) firstly, the working of the end regions (2, 3) of the workpiece (1) takes place simultaneously whilst the workpiece (1) is clamped between centres (8, 9) and is being driven by at least one face driver (7),
b) next, the centres (8, 9) are moved synchronously in the axial direction in such a way relative to the radially acting clamping means (10, 11) and, for this purpose, at least one of the radially acting clamping means (10, 11) is moved in such a way relative to the basic frame of the machine that the end regions (2, 3) of the workpiece (1) arrive within the gripping range of the radially acting clamping means (10, 11), and
c) then the middle region (4) of the workpiece (1) is worked whilst the workpiece (1) is clamped and driven by the radially acting clamping means (10, 11) at the already worked peripheral faces of the end regions (2, 3) of the workpiece (1),
d) the clamping between the centres (8, 9) being continuously maintained.

2. Process for the working of rotationally symmetrical workpieces (1) on lathes or rotary broaching machines having two mutually opposing main spindles (5, 6) which are equipped with radially acting clamping means (10, 11) and respectively assigned, axially movable centres (8, 9), wherein
a) firstly, the one end region (2) of the workpiece (1) is worked, the end region (2) to be worked being held by means of the centre (8) and the other end region (3) of the workpiece (1) being held by means of the centre (9) and radially acting clamping means (11),
b) next, the centres (8, 9) are moved synchronously with the workpiece (1) in the axial direction in such a way relative to the radially acting clamping means (10, 11) that the end region (2) of the workpiece (1) arrives within the gripping range of the radially acting clamping means (10) and the other end region of the workpiece (1) arrives outside the range of the radially acting clamping means (11),
c) then the other end region (3) of the workpiece (1) is worked, the already worked end region (2) being clamped by the centre (8) and radially acting clamping means (10), whilst the end region (3) to be worked is held only by a centre (9),
d) next, the centres (8, 9) are moved synchronously with the workpiece (1) in the axial direction in such a way relative to at least one of the radially acting clamping means (10, 11) that both end regions (2, 3) of the workpiece (1) arrive within range of the radially acting clamping means (10, 11), and
e) finally, the middle region of the workpiece (1) is worked, the workpiece (1) being clamped and driven at both ends both by a respective centre (8, 9) and by the radially acting clamping means (10, 11),
f) the clamping of the workpiece (1) between the centres (8, 9) being continuously maintained.

3. Process for the working of rotationally symmetrical workpieces according to one of the preceding claims, characterized in that the relative movement in the axial direction between the radial clamping means (10, 11) and the centres (8, 9) is effected by a movement of the centre in question relative to the assigned, radially acting clamping chuck.

4. Process for the working of rotationally symmetrical workpieces according to one of the preceding claims, characterized in that the relative movement in the axial direction between the radial clamping means (10, 11) and the centres (8, 9) is effected by a movement of the centre in question relative to the assigned, radially acting clamping jaws.

5. Process for the working of rotationally symmetrical workpieces according to one of the preceding claims, characterized in that the relative movement in the axial direction between the radial clamping means (10, 11) and the centres (8, 9) is effected by a movement of the centre in question relative to the assigned, radially acting main spindle (5, 6).

6. Process for the working of rotationally symmetrical workpieces according to one of the preceding claims, characterized in that the centres (8, 9), in the position extended relative to the assigned, radially acting clamping means (10, 11), are radially clamped and supported by the radially acting clamping means (10, 11).

7. Lathe or rotary broaching machine having two mutually opposing main spindles (5, 6) which are equipped with radially acting clamping means (10, 11) and therein movable, revolving centres (8, 9) and having at least one face driver (7), for the realization of the process according to Claim 1, characterized in that
a) the face driver (7) is axially displaceable relative to the assigned centre (8, 9),
b) the radially acting clamping means (10, 11) are axially displaceable relative to each other, and
c) the displacement of the centres (8, 9) can be realized synchronously to the displacement of the radially acting clamping means (10, 11).

8. Lathe or rotary broaching machine having two mutually opposing main spindles (5, 6) which are equipped with radially acting clamping means (10, 11) and therein movable, revolving centres (8, 9), for the realization of the process according to Claim 2, characterized in that
a) the radially acting clamping means (10, 11) are axially displaceable relative to each other,
b) the gripping members of at least one of the radially acting clamping means (10, 11) are radially movable independently from one another, and
c) the displacement of the centres (8, 9) can be realized synchronously to the displacement of the radially acting clamping means (10, 11).

9. Lathe or rotary broaching machine having two mutually opposing main spindles (5, 6) which are equipped with radially acting clamping means (10, 11) and therein movable, revolving centres (8, 9), for the realization of the process according to Claim 2, characterized in that
a) the gripping members of the two radially acting clamping means (10, 11) are dimensioned in the axial direction such that, when the centres (8, 9) are in an axial middle setting between the extended and the retracted setting, the points of the centres (8, 9) lie within the axial gripping range of the radially acting clamping means,
b) the centres (8, 9) can be fixed in the axial direction in this middle setting, and
c) the gripping members of at least one of the radially acting clamping means (10, 11) are radially movable independently from one another.

10. Lathe or rotary broaching machine according to one of the preceding claims, characterized in that the centres (8, 9) can be fixed in the extended and the retracted setting.

11. Lathe or rotary broaching machine according to one of the preceding claims, characterized in that the gripping members of the radially acting clamping means (10, 11) are axially movable relative to the basic element of these radially acting clamping means (10, 11).

12. Lathe or rotary broaching machine according to one of the preceding claims, characterized in that as radially acting clamping means jaw chucks (5, 6) having jaws (10, 11) are used.

13. Lathe or rotary broaching machine according to one of the preceding claims, characterized in that as radially acting clamping means collet chucks are present.

## Revendications

1. Procédé d'usinage de pièces à symétrie de révolution (1) sur des tours ou des machines à brocher, comportant deux broches principales (5, 6) en regard l'une de l'autre, qui sont équipées de moyens de serrage (10, 11) agissant radialement et de pointes de centrage (8, 9) mobiles axialement qui leur sont affectées, procédé dans lequel :
a) tout d'abord on effectue simultanément l'usinage des zones terminales (2, 3) de la pièce (1), tandis que la pièce (1) est bloquée entre les pointes de centrage (8,9) et est entraînée par au moins un toc d'entraînement avant (7),
b) ensuite, les pointes de centrage (8, 9) sont déplacées axialement en synchronisme par rapport aux moyens de serrage (10, 11) agissant radialement et, à cet effet, au moins un des moyens de serrage (10, 11) agissant radialement par rapport au châssis de la machine de telle sorte que les zones terminales (2, 3) de la pièce (1) parviennent à portée des moyens de serrage (10, 11) agissant radialement, et
c) puis, la zone centrale (4) de la pièce (1) est usinée, tandis que la pièce (1) est serrée sur les surfaces périphériques déjà usinées des zones terminales (2, 3) de la pièce (1) par les moyens de serrage (10, 11) agissant radialement et est entraînée,
d) la tension entre les pointes de centrage (8, 9) restant maintenue en permanence.

2. Procédé d'usinage de pièces à symétrie de révolution (1) sur des tours ou des machines à brocher comportant deux broches principales (5, 6) en regard l'une de l'autre, qui sont équipées de moyens de serrage (10, 11) agissant radialement et de pointes de centrage (8, 9) mobiles axialement qui leur sont affectées, procédé dans lequel :
a) tout d'abord, la première zone terminale (2) de la pièce (1) est usinée, la zone à usiner (2) étant maintenue à l'aide de la pointe de centrage (8) et l'autre zone terminale (3) de la pièce (1) étant maintenue à l'aide de la pointe de centrage (9) et du moyen de serrage (11) agissant radialement,
b) ensuite, les pointes de centrage (8, 9) sont déplacées axialement en synchronisme avec la pièce (1) par rapport aux moyens de serrage (10, 11) agissant radialement de telle sorte que la zone terminale (2) de la pièce (1) parvienne à portée du moyen de serrage (10) agissant radialement et que l'autre zone terminale de la pièce (1) soit hors de portée du moyen de serrage (11) agissant radialement,
c) puis, l'autre zone terminale (3) de la pièce (1) est usinée, la zone terminale (2) déjà usinée étant bloquée par la pointe de centrage (8) et par le moyen de serrage (10) agissant radialement, tandis que la zone terminale (3) à usiner n'est maintenue que par une pointe de centrage (9),
d) ensuite, les pointes de centrage (8, 9) sont déplacées axialement en synchronisme avec la pièce (1) par rapport à au moins un des moyens de serrage (10, 11) agissant radialement de telle sorte que les deux zones terminales (2, 3) de la pièce (1) parviennent dans la zone des moyens de serrage (10, 11) agissant radialement, et
e) enfin, la zone centrale de la pièce (1) est traitée, la pièce (1) étant bloquée aux deux extrémités autant par une pointe de centrage respective (8, 9) que par les moyens de serrage (10, 11) agissant radialement et entraînée,
f) la tension de la pièce (1) entre les pointes de centrage (8, 9) étant maintenue constante en permanence.

3. Procédé d'usinage de pièces à symétrie de révolution selon l'une quelconque des revendications précédentes, caractérisé en ce que le déplacement relatif dans la direction axiale entre les moyens de serrage radiaux (10, 11) et les pointes de centrage (8, 9) est effectué par un déplacement de la pointe de centrage concernée vis-à-vis du mandrin de serrage agissant radialement qui lui est affecté.

4. Procédé d'usinage de pièces à symétrie de révolution selon l'une quelconque des revendications précédentes, caractérisé en ce que le mouvement relatif dans la direction axiale entre les moyens de serrage radiaux (10, 11) et les pointes de centrage (8, 9) est effectué par un déplacement de la pointe de centrage concernée vis-à-vis de la mâchoire de serrage agissant radialement qui lui est affectée.

5. Procédé d'usinage de pièces à symétrie de révolution selon l'une quelconque des revendications précédentes, caractérisé en ce que le mouvement relatif dans la direction axiale entre les moyens de serrage radiaux (10, 11) et les points de centrage (8, 9) est effectué par un déplacement de la pointe de centrage concernée vis-à-vis de la broche principale (5, 6) agissant radialement qui lui est affectée.

6. Procédé d'usage de pièces à symétrie de révolution selon l'une quelconque des revendications précédentes, caractérisé en ce que les pointes de centrage (8, 9) sont bloquées et soutenues radialement, dans la position déployée vis-à-vis des moyens de serrage (10, 11) agissant radialement qui leur sont affectés, par les moyens de serrage (10, 11) agissant radialement.

7. Tour, éventuellement machine à brocher, comportant deux broches principales en regard (5, 6), qui sont équipées de moyens de serrage (10, 11) agissant radialement et de pointes de centrage (8, 9) rotatives et mobiles dans ceux-ci, et d'au moins un toc d'entraînement avant (7), pour réaliser le procédé selon la revendication 1, caractérisé en ce que
(a) le toc d'entraînement avant (7) peut être déplacé axialement par rapport à la pointe de centrage (8, 9) qui lui est affectée,
(b) les moyens de serrage (10, 11) agissant radialement peuvent être déplacés l'un vis-à-vis de l'autre axialement, et
(c) le déplacement des pointes de centrage (8, 9) peut être réalisé en synchronisme avec le déplacement des moyens de serrage (10, 11) agissant radialement.

8. Tour, éventuellement machine à brocher comportant deux broches principales (5, 6) en regard, qui sont équipées de moyens de serrage (10, 11) agissant radialement et de pointes de centrage (8, 9) rotatives moyens et mobiles dans ceux-ci, pour réaliser le procédé selon la revendication 2, caractérisé en ce que
a) les moyens de serrage (10, 11) agissant radialement (10, 11) peuvent être déplacés axialement l'un par rapport à l'autre,
b) les organes de préhension d'au moins un des moyens de serrage (10, 11) agissant radialement sont mobiles radialement indépendamment l'un de l'autre, et
c) et le déplacement des pointes de centrage (8, 9) peut être réalisé en synchronisme avec le déplacement des moyens de serrage (10, 11) agissant radialement.

9. Tour, éventuellement machine à brocher comportant deux broches principales (5, 6) en regard, qui sont équipées de moyens de serrage (10, 11) agissant radialement et de pointes de centrage (8, 9) rotatives et mobiles dans ceux-ci (8, 9) pour réaliser le procédé de la revendication 2, caractérisé en ce que
a) les organes de préhension des deux moyens de serrage (10, 11) agissant radialement sont dimensionnés dans la direction axiale de telle sorte qu'en position centrale axiale des pointes de centrage (8, 9) entre la position déployée et la position retirée, les pointes de centrage (8,9) se situent à portée axiale des moyens de serrage agissant radialement,
b) les pointes de centrage (8, 9) peuvent être fixées dans la direction axiale dans cette position centrale, et
c) les organes de préhension d'au moins un des moyens de serrage (10, 11) agissant radialement sont mobiles radialement indépendamment l'un de l'autre.

10. Tour, éventuellement machine à brocher selon l'une quelconque des revendications précédentes, caractérisé en ce que les pointes de centrage (8, 9) peuvent être fixées dans la position déployée et dans la position retirée.

11. Tour, éventuellement machine à brocher selon l'une quelconque des revendications précédentes, caractérisé en ce que les organes de préhension des moyens de serrage (10, 11) agissant radialement sont mobiles axialement vis-à-vis de la base de ces moyens de serrage (10, 11) agissant radialement.

12. Tour, éventuellement machine à brocher selon l'une quelconque des revendications précédentes, caractérisé en ce que l'on utilise comme moyens de serrage agissant radialement des mandrins (5, 6) à mâchoires (10, 11).

13. Tour, éventuellement machine à brocher selon l'une quelconque des revendications précédentes, caractérisé en ce que des pinces de serrage peuvent être utilisées à titre de moyens de serrage agissant radialement.
